# EUROPÄISCHE PATENTSCHRIFT

(11) **EP 0 804 535 B1**
(45) Veröffentlichungstag und Bekanntmachung des Hinweises auf die Patenterteilung: **18.11.1998**
(21) Anmeldenummer: 96900916.6
(22) Anmeldetag: 08.01.1996
(51) Int. Cl.: C11D 3/39, C11D 17/06

(54) **BLEICHENDES WASCH- UND REINIGUNGSMITTEL IN GRANULATFORM**
GRANULAR BLEACHING WASHING AND CLEANING AGENT
DETERGENTS ET NETTOYANTS DE BLANCHIMENT SOUS FORME DE GRANULATS

(30) Priorität: 17.01.1995 DE 19501117
(43) Veröffentlichungstag der Anmeldung: 05.11.1997
(73) Patentinhaber: Henkel Kommanditgesellschaft auf Aktien, 40191 Düsseldorf (DE)
(72) Erfinder: BLOCK, Christian, D-50733 Köln (DE); BEAUJEAN, Hans-Josef, D-41539 Dormagen (DE); BÖCKER, Monika, D-42799 Leichlingen (DE); UPADEK, Horst, D-40883 Ratingen (DE); KRINGS, Peter, D-47807 Krefeld (DE); ERBS, Katrin, D-40724 Hilden (DE); HOLDERBAUM, Thomas, D-40789 Monheim (DE)
(86) Internationale Anmeldenummer: EP9600047
(87) Internationale Veröffentlichungsnummer: WO9622355

(56) Entgegenhaltungen:
- EP-A- 0 342 043
- WO-A-92/06167
- DE-A- 4 406 210
- DATABASE WPI Section Ch, Week 9305 Derwent Publications Ltd., London, GB; Class D25, AN 93-043019 XP002003219 & SE,A,9 100 760 (BARKSTROEM L H) , 14.September 1992
- DATABASE WPI Section Ch, Week 8450 Derwent Publications Ltd., London, GB; Class D25, AN 84-309801 XP002003220 & JP,A,59 194 000 (KAO CORP) , 2.November 1984

## Beschreibung

Die im folgenden beschriebene Erfindung liegt auf dem Gebiet der festen streufähigen Wasch- und Reinigungsmittel, wie sie für die Textilwäsche und die Reinigung harter Oberflächen im Haushalt und im Gewerbe verwendet werden. Sie betrifft dabei solche Wasch- und Reinigungsmittel, die als bleichende Komponente Natriumpercarbonat enthalten.

Eine der jüngeren Entwicklungsrichtungen bei pulverförmigen Textilwaschmitteln sind Waschmittel mit deutlich höheren Schüttdichten, die als einen der wesentlichen Vorteile gegenüber den früheren leichten Produkten kleinere Packungsgrößen bei gleichem Wirkstoffgehalt ermöglichen. Geringere Packungsgrößen wiederum wirken sich vorteilhaft bei Lagerung und Transportkapazitäten und auch in geringerem Verbrauch an Verpackungsmaterial aus. Waschmittel mit entsprechend hohen Schüttgewichten werden üblicherweise nicht mehr durch die früher gebräuchliche Sprühtrocknung wäßriger Waschmittelslurries hergestellt, sondern durch mehr oder weniger trockene Agglomeration der Einzelkomponenten etwa in verdichtend wirkenden Mischaggregaten oder durch Agglomeration unter Druck, beispielsweise im Extrusionsverfahren, zu entsprechend dichten Granulatkörnchen geformt. Beispiele für derartige Verfahren finden sich in der Patentanmeldung WO 93/23523 und im europäischen Patent 486 592.

Eine weitere Entwicklung aus jüngerer Zeit auf dem Gebiet der pulverförmigen Wasch- und Reinigungsmittel betrifft den Einsatz von Natriumpercarbonat anstelle des früher üblichen Natriumperborat als Bleichmittel. Der Wunsch, Natriumpercarbonat einzusetzen, resultiert in erster Linie aus seiner guten Löslichkeit und seiner ökologischen Unbedenklichkeit. Der Einsatz von Natriumpercarbonat in Wasch- und Reinigungsmitteln bietet aber auch Schwierigkeiten, die in erster Linie von der geringen Lagerstabilität des Natriumpercarbonats in feuchter Atmosphäre und in Gegenwart von Schwermetallionen herrühren. Um diese Nachteile zu vermeiden, sind bereits zahlreiche Versuche unternommen worden, Natriumpercarbonat beispielsweise durch Einarbeitung von Stabilisatoren oder durch Aufbringen von Hüllsubstanzen stabiler zu machen, ohne daß bis heute ein für alle Fälle befriedigendes Verfahren zur Stabilisierung gefunden worden wäre. Als ältere Veröffentlichungen, die die Einarbeitung von Natriumpercarbonat in pulverförmige Wasch- und Reinigungsmittel beschreiben, seien an dieser Stelle beispielhaft nur die europäischen Patentanmeldungen 451 893 und 567 140 sowie die internationale Patentanmeldung WO 92/6163 genannt.

Auch der vorliegenden Erfindung lag die Aufgabe zugrunde, ein verbessertes Wasch- und Reinigungsmittel mit hohem Schüttgewicht und Natriumpercarbonat als Bleichmittel zu schaffen. Eine besondere Bedeutung kam dabei der stabilen Einarbeitung des Natriumpercarbonats zu. Eine weitere Aufgabe lag darin, ein Wasch- und Reinigungsmittel zu schaffen, daß stabil gegen Entmischung der Einzelkomponenten bei Lagerung und Transport ist. Weitere Aufgaben betrafen die gezielte Löslichkeit der Einzelkomponenten im Hinblick auf deren Wirksamwerden in der Wasch- und Reinigungsflotte und die leichte Dosierbarkeit des Wasch- und Reinigungsmittels.

Es wurde jetzt gefunden, daß mit dem nachfolgend beschriebenen Wasch- und Reinigungsmittel bei all diesen Problemen eine wesentliche Verbesserung zu erreichen ist.

Gegenstand der Erfindung ist ein Wasch- und Reinigungsmittel in granulierter Form, bestehend aus wenigstens zwei Granulaten unterschiedlicher Zusammensetzung, von denen eines Buildersubstanzen und gegebenenfalls Tenside und weitere Wirkstoffe enthält und durch Agglomeration seiner Bestandteile, gegebenenfalls unter Druck mit nachfolgender Zerkleinerung zur gewünschten Korngröße, hergestellt wird und ein anderes im wesentlichen aus Natriumpercarbonat besteht und durch Wirbelschichtsprühgranulation hergestellt wird, dadurch gekennzeichnet, daß diese beiden Granulate jeweils allein Schüttdichten von mehr als 500 g/l aufweisen, die mittleren Korngrößen beider Granulate im Bereich von 0,6 bis 6 mm liegen und das Verhältnis der mittleren Korngrößen beider Granulate zwischen 2 : 1 und 1 : 2 liegt. Besonders bevorzugt werden dabei Wasch- und Reinigungsmittel, bei denen in den beiden mindestens enthaltenen Granulaten wenigstens 80 Gew.-% aller Teilchen eine Korngröße im Bereich von 50 % bis 150 % und insbesondere im Bereich von 80 % bis 120 % der jeweils mittleren Korngröße aufweisen. Vorzugsweise sollen weiterhin die mittleren Korngrößen der beiden mindestens enthaltenen Granulate im Bereich zwischen 0,8 und 3 mm und insbesondere im Bereich zwischen 1 und 2 mm liegen. Besonders bevorzugt werden schließlich Wasch- und Reinigungsmittel, bei denen das Verhältnis der mittleren Korngrößen der beiden mindestens enthaltenen Granulate im Bereich von 1,5 : 1 bis 1 : 1,5 und insbesondere im Bereich von 1,2 : 1 bis 1 : 1,2 liegt.

Das neue Mittel zeichnet sich gegenüber vorbekannten Wasch- und Reinigungsmitteln mit gleicher Bruttozusammensetzung durch eine außerordentlich hohe Stabilität des Percarbonats und durch ungewöhnlich hohe Beständigkeit gegen Entmischung bei Lagerung und Transport aus.

Im folgenden sollen Zusammensetzungen, Aufbau und Herstellung der erfindungsgemäßen Mittel im einzelnen erläutert werden.

Bei den neuen pulverförmigen Wasch- und Reinigungsmitteln handelt es sich um solche, die im wesentlichen aus Granulaten bestehen. Das heißt, diese Mittel werden nicht durch einfaches Vermischen der chemischen Komponenten in Pulverform hergestellt, sondern es werden zunächst eine oder mehrere chemische Komponenten, die ursprünglich in sehr feinteiliger Form oder auch flüssig vorliegen, in einem Agglomerationsschritt zu Granulat verarbeitet, dessen einzelne Körnchen die Komponenten jeweils in gleichem Mischungsverhältnis enthalten. Die erfindungsgemäßen Mittel enthalten wenigstens zwei derartige Granulate, die unterschiedliche Zusammensetzung aufweisen, und die nach ihrer jeweiligen Herstellung gegebenenfalls zusammen mit weiteren Komponenten zum fertigen Wasch- oder Reinigungsmittel vereinigt werden. Eines der beiden Granulate enthält Buildersubstanzen sowie gegebenenfalls Tenside und weitere Wirksubstanzen, während das zweite Granulat im wesentlichen aus Natriumpercarbonat besteht.

Bei dem ersten im erfindungsgemäßen Wasch- und Reinigungsmittel obligatorischen Granulat werden Buildersubstanzen sowie Tenside und gegebenenfalls weitere Komponenten, die in diesem Granulat enthalten sein können, durch Agglomeration der Bestandteile, gegebenenfalls unter Druck mit nachfolgender Zerkleinerung, zur gewünschten Korngröße geformt. Es handelt sich bei diesem Granulat also nicht um ein solches, das nach einem einfachen Sprühtrocknungsprozeß aus einem flüssigen Slurry der Bestandteile hergestellt wird, wenn auch nicht ausgeschlossen ist, daß vor dem Agglomerationsschritt einzelne oder mehrere Bestandteile des Granulats durch Sprühtrocknung gewonnen werden. Das fertige Granulat weist Schüttdichten von mehr als 500 g/l auf, wobei eine praktische Obergrenze bei etwa 1400 g/l anzusetzen ist, die aber in Einzelfällen auch überschritten werden kann. Vorzugsweise soll die Schüttdichte dieses Granulats für sich allein im Bereich von 600 bis 1200 g/l und insbesondere im Bereich von 700 bis 1000 g/l liegen. Vorzugsweise erfolgt die Herstellung dieses Granulats in Mischgranulatoren, gegebenenfalls unter gleichzeitiger Trocknung, wenn größere Mengen an flüssigen Materialien eingemischt werden. Ein Beispiel für ein derartiges Herstellverfahren ist in der internationalen Anmeldung WO 93/23523 angegeben, in der auch weitere geeignete Verfahren als Stand der Technik zitiert werden. Bei diesem Verfahren ist es möglich, durch entsprechende Wahl der Mischwerkzeuge, der Mischerdrehzahlen, der Temperaturen und der Verweilzeiten im Mischer die Korngröße des Endprodukts in weiten Grenzen frei zu bestimmen und auch auf enge Korngrößenverteilungen hinzuarbeiten. Eine weitere Einengung der Korngrößenverteilung ist durch Absieben und Rückführen von nicht spezifikationsgerechtem Material möglich.

Eine andere Möglichkeit zur Herstellung dieses ersten Granulats besteht in der Mischung aller seiner Komponenten in üblichen Mischgeräten und nachfolgendes Komprimieren der Mischung zwischen Walzen mit anschließender Zerkleinerung der Schülpe. Eine enge Korngrößenverteilung kann hier in der Regel nur durch Absieben und Rückführen der nicht spezifikationsgerechten Teilchen erreicht werden.

Ein drittes Herstellverfahren für dieses Granulat, das im Rahmen der vorliegenden Erfindung besonders bevorzugt wird, ist die strangförmige Extrusion eines Gemischs aller Bestandteile unter Druck und die nachfolgende Zerkleinerung der Stränge auf die gewünschte Korngröße. Dieses Verfahren wird eingehend in der europäischen Patentschrift 486 592 beschrieben. Bei diesem Verfahren wird ein homogenes festes, rieselfähiges Vorgemisch bei Drucken zwischen 25 und 200 bar durch Lochformen gepreßt, wobei die Lochweite den Durchmesser der austretenden Stränge bestimmt. Als Granuliereinrichtung sind beispielsweise Pellet-Pressen, 1- und 2-Wellen-Extruder und Planetwalzen-Extruder geeignet, wobei kontinuierlich arbeitende 2-Schnecken-Extruder bevorzugt werden. Vorzugsweise werden die an der Lochdüsenplatte der Extruder austretenden Stränge mit Hilfe eines rotierenden Abschlagmessers zu zylinderförmigen Granulatkörnern geschnitten, die, sofern gewünscht, anschließend in einem marktgängigen Rondiergerät, gegebenenfalls unter Mitverwendung geringer Mengen an Trockenpulver, abgerundet werden. Dieses Herstellverfahren erlaubt es, besonders enge Kornverteilungen einzustellen. Neben den genannten Verfahren sind selbstverständlich auch andere Verfahren für die Herstellung dieses Granulats geeignet, wenn sie ein Granulat mit der geeigneten Schüttdichte, Teilchengröße und Teilchengrößenverteilung liefern.

Als wesentliche Komponente enthalten die Teilchen dieses ersten Granulats wenigstens eine Buildersubstanz, auch als Gerüstsubstanz bezeichnet. Unter Buildersubstanzen versteht man heute im engeren Sinne schwach sauer, neutral oder alkalisch reagierende lösliche und/oder unlösliche Verbindungen, die die Eigenschaft haben, Calcium und gegebenenfalls Magnesiumionen auszufällen oder komplex zu binden. Bevorzugt werden hier, wie auch bei den Tensiden, die ökologisch unbedenklichen Verbindungen.

Vorzugsweise liegt der Gehalt an Buildersubstanzen in diesem Granulat zwischen etwa 5 Gew.-% und etwa 90 Gew.-%, insbesondere zwischen etwa 10 Gew.-% und etwa 60 Gew.-%, gerechnet als wasserfreie Substanz. Bezogen auf das gesamte Wasch- und Reinigungsmittel beträgt der Gehalt an Buildersubstanzen vorzugsweise zwischen etwa 10 Gew.-% und etwa 80 Gew.-%, insbesondere zwischen etwa 15 Gew.-% und etwa 60 Gew.-%, wobei vorzugsweise wenigstens die Hälfte der im Wasch- und Reinigungsmittelmittel enthaltenen Buildermenge in diesem Granulat enthalten ist. Insbesondere enthält es wenigstens 80 Gew.-% der gesamten Buildermenge. Handelt es sich bei den erfindungsgemäßen Mitteln um Waschmittel für die Anwendung an Textilien, so liegt der Gesamtgehalt an Buildersubstanzen vorzugsweise zwischen etwa 10 Gew.-% und etwa 50 Gew.-%, insbesondere zwischen etwa 15 Gew.-% und etwa 45 Gew.-%.

Als Builder eignen sich in erster Linie die feinkristallinen synthetischen wasserhaltigen Zeolithe, insbesondere die Zeolithe der Typen A und P, die bei der Produktion des Granulats gegebenenfalls auch in Form einer wasserhaltigen Paste, wie sie bei der Herstellung des Zeoliths anfällt, eingesetzt werden können. Ansonsten kann sprühgetrocknetes Pulver, das gegebenenfalls Hilfs- und Zusatzstoffe enthalten kann und üblicherweise zwischen etwa 20 und 22 Gew.-% an fester gebundenem Wasser enthält, eingesetzt werden.

Als weitere Builderbestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1 000 und 100 000, das der Copolymeren zwischen 2 000 und 200 000, vorzugsweise 50 000 bis 120 000, bezogen auf freie Säure. Ein besonders bevorzugtes Acrylsäure-Maleinsäure-Copolymer weist ein Molekulargewicht von 50 000 bis 100 000 auf. Besonders bevorzugt werden auch Terpolymere, die aus Acrylsäure, Maleinsäure und Vinylacetat mit nachfolgender Verseifung erhältlich sind. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind, sowie polymere Säuren, die durch Polymerisation von Acrolein und anschließende Disproportionierung mittels Alkalien erhalten werden und aus Acrylsäureeinheiten und Vinylalkoholeinheiten bzw. Acroleinheiten aufgebaut sind. Weiter eignen sich auch polykondensierte Aminodicarbonsäuren, wie beispielsweise Polyasparaginsäure.

Brauchbare niedermolekulare organische Gerüstsubstanzen sind beispielsweise die bevorzugt in Form ihrer Natriumsalze eingesetzten Polycarbonsäuren, wie Citronensäure und Nitrilotriessigsäure (NTA), sofern ein derartiger Einsatz aus ökologischen Gründen nicht zu beanstanden ist.

In Fällen, in denen ein Phosphatgehalt toleriert wird, können auch Phosphate als Buildersubstanzen verwendet werden, insbesondere Pentanatriumtriphosphat, gegebenenfalls auch Pyrophosphate sowie Ortophosphate, die in erster Linie als Fällungsmittel für Wasserhärte wirken.

Geeignete anorganische, nicht komplexbildende Buildersalze sind die - auch als "Waschalkalien" bezeichneten - Bicarbonate, Carbonate, Borate oder Silikate der Alkalien. Von den Alkalisilikaten sind vor allem die Natriumsilikate mit einem Verhältnis Na₂O : SiO₂ wie 1 : 1 bis 1 : 3,5 sowie die kristallinen Natriumdisilikate mit Schichtstruktur zu erwähnen.

Ein weiterer wesentlicher Bestandteil des ersten Granulats können Tenside sein, wobei alle in Wasch- oder Reinigungsmitteln üblichen Tenside hier Verwendung finden können, d.h. anionische, nichtionische, zwitterionische und kationische Tenside. Bevorzugt werden allerdings anionische und nichtionische Tenside und Gemische aus Tensiden dieser beiden Klassen eingesetzt. Die Art des Tensids und der Tensidgehalt in diesen Granulaten hängen in erster Linie vom Einsatzbereich des Mittels ab. Während Mittel, die für die maschinelle Reinigung von Geschirr bestimmt sind, vielfach ganz ohne Tensid auskommen und gegebenenfalls wenig schwach schäumende nichtionische Tenside als bevorzugte Tenside enthalten, ist der Tensidgehalt in Textilwaschmitteln höher und schließt im allgemeinen anionische Tenside ein. Vorzugsweise liegt deshalb der Tensidgehalt in diesem ersten Granulat zwischen etwa 0,5 Gew.-% und etwa 50 Gew.-%, insbesondere zwischen etwa 2 Gew.-% und etwa 30 Gew.-%, bezogen auf dieses Granulat. In Bezug auf das gesamte Wasch- und Reinigungsmittel liegt der Anteil der Tenside vorzugsweise zwischen etwa 0,5 Gew.-% und etwa 30 Gew.-%, insbesondere zwischen etwa 1 Gew.-% und etwa 25 Gew.-%, wobei aber nicht der gesamte Gehalt des Mittels an Tensiden in diesem ersten Granulat enthalten sein muß. Vorzugsweise sind aber wenigstens 50 Gew.-%, insbesondere wenigstens 80 Gew.-% der insgesamt im Wasch- und Reinigungsmittel enthaltenen Tenside in diesem Granulat enthalten.

Als anionische Tenside eignen sich beispielsweise solche vom Typ der Sulfonate und Sulfate. Als Tenside vom Sulfonattyp kommen Alkylbenzolsulfonate (C₉-C₁₅-Alkyl) und Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen durch Sulfochlorierung oder Sulfoxidation und anschließende Hydrolyse bzw. Neutralisation oder durch Bisulfitaddition an Olefine erhältlich sind, sowie die Ester von α-Sulfofettsäuren (Estersulfonate), z.B. die α-sulfonierten Methylester der hydrierten Kokos-, Palmkern- oder Talgfettsäuren, sowie die Sulfobernsteinsäureester und die sulfonierten Glycerinester gesättigter Fettsäuren.

Geeignete Tenside vom Sulfattyp sind die Schwefelsäuremonoester aus primären Alkoholen natürlichen und synthetischen Ursprungs, d.h. aus Fettalkoholen, z.B. Kokosfettalkoholen, Talgfettalkoholen, Oleylalkohol, Lauryl-, Myristyl-, Palmityl- oder Stearylalkohol, oder den C₁₀-C₂₀-Oxoalkoholen, und diejenigen sekundärer Alkohole dieser Kettenlänge. Auch die Schwefelsäuremonoester der mit 1 bis 6 Mol Ethylenoxid ethoxylierten langkettigen primären und sekundären Alkohole (Ethersulfate) sind geeignet. Ebenso eignen sich sulfatierte Fettsäuremonoglyceride.

Ferner sind z.B. Seifen aus natürlichen oder synthetischen, vorzugsweise gesättigten Fettsäuren brauchbar. Geeignet sind insbesondere aus natürlichen Fettsäuren, z.B. Kokos-, Palmkern- oder Talgfettsäuren abgeleitete Seifengemische. Bevorzugt sind solche, die zu 50 bis 100 % aus gesättigten C₁₂-C₁₈-Fettsäureseifen und zu 0 bis 50 % aus Ölsäureseife zusammengesetzt sind.

Die anionischen Tenside können in Form ihrer Natrium-, Kalium- und Ammoniumsalze sowie als lösliche Salze organischer Basen, wie Mono-, Di- oder Triethanolamin vorliegen. Vorzugsweise werden die Natriumsalze eingesetzt.

Als nichtionische Tenside sind vor allem die Anlagerungsprodukte von 1 bis 40, vorzugsweise 2 bis 20 Mol Ethylenoxid an 1 Mol einer langkettigen aliphatischen Verbindung mit im wesentlichen 10 bis 20 Kohlenstoffatomen aus der Gruppe der Alkohole, Carbonsäuren, Fettamine, Carbonsäureamide oder Alkansulfonamide für die erfindungsgemäßen Wasch- und Reinigungsmittel brauchbar. Besonders wichtig sind die Anlagerungsprodukte von 8 bis 20 Mol Ethylenoxid an primäre Alkohole, wie z.B. an Kokos- oder Talgfettalkohole, an Oleylalkohol, an Oxoalkohole, oder an sekundäre Alkohole mit 8 bis 18, vorzugsweise 12 bis 18 C-Atomen. Brauchbar sind auch die entsprechenden Alkoxylierungsprodukte, die neben Ethylenoxid auch Propylenoxid angelagert enthalten. Zu erwähnen sind ferner auch die Ethoxylierungsprodukte von Polypropylenoxid, die als besonders schwach schäumende Tenside gelten.

Neben den wasserlöslichen nichtionischen Tensiden sind auch nicht bzw. nicht vollständig wasserlösliche Polyglykolether mit 2 bis 7 Ethylenglykoletherresten im Molekül von Interesse, insbesondere, wenn sie zusammen mit wasserlöslichen, nichtionischen oder anionischen Tensiden eingesetzt werden.

Als nichtionische Tenside können auch Alkylglykoside der allgemeinen Formel R-O-(G)ₓ eingesetzt werden, in der R einen primären geradkettigen oder in 2-Stellung methylverzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt. Besonders bevorzugt werden dabei die sogenannten Alkylglucoside, bei denen G eine Glucoseeinheit darstellt, insbesondere diejenigen, bei denen x Werte zwischen 1 und 3 aufweist.

Ferner eignen sich als nichtionische Tenside langkettige Aminoxide und Polyhydroxyfettsäureamide, wie sie durch reduktive Aminierung von Monosacchariden mit Ammoniak oder niedere Alkylaminen und nachfolgende Acylierung mit Fettsäureestern erhältlich sind.

Neben Tensid und Buildersubstanz kann dieses erste obligatorische Granulat des erfindungsgemäßen Wasch- und Reinigungsmittels weitere übliche Inhaltsstoffe solcher Mittel enthalten. Für Textilwaschmittel sind hier, insbesondere Vergrauungsinhibitoren, Schaumregulatoren, optische Aufheller, textilweichmachende Stoffe, Neutralsalze, Bleichaktivatoren, Enzyme, Duftstoffe und Farbstoffe zu nennen. Für Reinigungsmittel, die in erster Linie zur Reinigung harter Oberflächen, insbesondere zur maschinellen Geschirreinigung eingesetzt werden, sind als Wirkstoffe, die in diesem ersten Granulat enthalten sein können, vor allem anorganische Neutralsalze und Puffersubstanzen, Alkalisierungsmittel wie NaOH, Schaumregulatoren, Enzyme, Duftstoffe, Farbstoffe, Bleichaktivatoren und Korrosionsinhibitoren für Glas und Metall, beispielsweise Silberschutzmittel zu erwähnen. Die genannten Inhaltsstoffe und gegebenenfalls weitere Hilfs- und Zusatzstoffe können aber auch Bestandteile in anderen Granulaten des Mittels sein oder dem Wasch- oder Reinigungsmittel mit seinen zwei obligatorischen Granulaten getrennt zudosiert werden. Besonders bevorzugt ist es im Rahmen der vorliegenden Erfindung, Bleichaktivatoren, Enzyme, Schauminhibitoren oder Vergrauungsinhibitoren dem Wasch- oder Reinigungsmittel als eigene Granulate zuzusetzen.

Als Vergrauungsinhibitoren eignen sich für die erfindungsgemäßen Waschmittel vorzugsweise Carboxymethylcellulose, Methylcellulose, Methylhydroxyethylcellulose und Gemische dieser Verbindungen. Brauchbar sind beispielsweise auch Polymere des Vinylpyrrolidons und hydrophile Polyamide und Polyester.

Als Schaumregulatoren werden in den erfindungsgemäßen Wasch- und Reinigungsmitteln vorzugsweise Seifen mit einem hohen Anteil an C₁₈-C₂₄-Fettsäuren, Organopolysiloxane, Paraffine und langkettige amidische Verbindungen verwendet, wobei es vorteilhaft ist, Gemische verschiedener Regulatoren einzusetzen.

Als Bleichaktivatoren, die der Verstärkung der Bleichwirkung bei niedrigen Temperaturen dienen, eignen sich in erster Linie organische N-Acyl- bzw. O-Acylverbindungen, die in der Lage sind, in der wäßrigen Waschflotte mit Wasserstoffperoxid organische Persäuren zu bilden. Hier seien als Beispiele nur N,N,N',N'-Tetraacetylethylendiamin und Glukosepentaacetat genannt.

Bei den optischen Aufhellern handelt es sich meist um Derivate der Diaminostilbendisulfonsäure bzw. deren Alkalimetallsalze, sowie um substituierte 4,4'-Distyryl-diphenyle.

Als Enzyme kommen solche aus den Klassen der Proteasen, Lipasen, Amylasen, Cutinasen und Cellulasen und deren Gemische in Betracht. Die Enzyme können an Trägerstoffen adsorbiert oder in Hüllsubstanzen eingebettet sein, um sie gegen vorzeitige Zersetzung zu schützen.

Weiterhin sind Stabilisatoren, insbesondere für Bleichmittel und Enzyme zu erwähnen, wobei in erster Linie die Salze von Polyphosphonsäuren, beispielsweise 1-Hydroxyethan-1,1-diphosphonsäure und Diethylentriaminpentamethylenphosphonsäure zu nennen sind.

Das zweite im erfindungsgemäßen Wasch- und Reinigungsmittel enthaltene Granulat besteht im wesentlichen aus Natriumpercarbonat (2 Na₂CO₃ x 3 H₂O₂). "Im wesentlichen" bedeutet dabei, daß Natriumpercarbonat der bestimmende Wirkstoff in diesem Granulat ist und dieses Granulat neben Natriumpercarbonat nur solche Stoffe enthält, die zur chemischen Stabilisierung des Natriumpercarbonats benötigt werden oder die zur mechanischen Stabilisierung des Granulatkorns eingesetzt werden. Vorzugsweise enthält daher dieses Granulat wenigstens 75 Gew.-% und insbesondere wenigstens 85 Gew.-% an Natriumpercarbonat. Dieses Natriumpercarbonat enthaltende Granulat weist ebenfalls wie das oben geschilderte tensidhaltige Granulat für sich allein Schüttdichten von mehr als 500 g/l bis hin zu etwa 1400 g/l auf wobei auch hier höhere Schüttdichten nicht ausgenommen sind. Vorzugsweise soll die Schüttdichte im Bereich von 600 - 1200 g/l und insbesondere zwischen 700 und 1000 g/l liegen. Die mittlere Korngröße dieses Granulats liegt im Bereich von 0,6 - 6 mm, wobei Bereiche zwischen 0,8 und 3 mm und insbesondere zwischen 1 und 2 mm besonders bevorzugt sind. Die Herstellung dieses Granulats erfolgt mit Hilfe eines Verfahrens, das als Wirbelschicht-Sprühgranulation bezeichnet wird und bei dem eine Wasserstoffperoxid- und eine Natriumcarbonatlösung in einer Wirbelschichtapparatur auf Natriumpercarbonatkeime gesprüht werden und gleichzeitig Wasser verdampft wird. Eine oder beide dieser Lösungen können weiterhin Hilfsstoffe für die Kristallbildung, Füllstoffe oder insbesondere Stabilisatoren für das sich bildende Natriumpercarbonatgranulat enthalten.

Eine besonders bevorzugte Ausführungsform für die Herstellung des Natriumpercarbonatgranulats ist das in der Patentanmeldung WO 95/06615 beschriebene Verfahren. Bei diesem Verfahren werden eine wäßrige Wasserstoffperoxidlösung und eine wäßrige Natriumcarbonatlösung mit Hilfe einer einzigen Düse in die Wirbelschicht gesprüht, wobei gleichzeitig Wasser im Bereich von 40 - 95 °C verdampft wird.

Besonders bevorzugt werden Wirbelschichtsprühgranulationsverfahren, bei denen gleichzeitig eine Klassierung der gebildeten Granulatkörner in der Weise stattfindet, daß nur Granulatkörner der gewünschten Größe ausgetragen werden und Überkorn praktisch nicht gebildet wird. Diese klassierenden Verfahren, wie sie beispielsweise in den europäischen Patentanmeldungen 163 836 und 332 929 geschildert werden, ermöglichen es, gezielt bestimmte Korngrößen bei gleichzeitig enger Korngrößenverteilung ohne einen nachfolgenden Klassierungsschritt herzustellen. Im einfachsten Fall kann die Größenklassierung in der Wirbelschicht beispielsweise mittels einer Siebvorrichtung oder durch einen entgegengeführten Luftstrom (Sichterluft) erfolgen, der so reguliert wird, das erst Teilchen ab einer bestimmten Teilchengröße aus der Wirbelschicht entfernt und kleinere Teilchen in der Wirbelschicht zurückgehalten werden. Geeignete Wirbelschichtanlagen werden beispielsweise von der Firma Glatt als Anlage zur Granuliertrocknung vertrieben.

Das so hergestellte Granulat aus Natriumpercarbonat kann als solches im erfindungsgemäßen Wasch- und Reinigungsmittel eingesetzt werden, wenn es die obengenannten Spezifikationen erfüllt. Doch ist es auch möglich und vielfach auch vorteilhaft, das so vorgebildete Granulat in derselben Wirbelschichtanlage oder in einem nachfolgenden Schritt mit geeigneten Hüllsubstanzen zu beschichten. Geeignet sind organische Hüllsubstanzen, die aus Lösungen oder als Schmelze aufgebracht werden können; bevorzugt werden aber anorganische Hüllsubstanzen, insbesondere Alkalicarbonate, Alkalisilikate und Magnesiumsalze. Weniger bevorzugt werden Borate, da ja gerade durch den Einsatz des Natriumpercarbonats die Verwendung von Boraten in den Waschmitteln vermieden werden soll. Die Hüllsubstanzen können in üblichen Mischgranulationsgeräten auf das vorgebildete Percarbonatgranulat aufgebracht werden; erfindungsgemäß wird aber die Umhüllung in der Wirbelschicht bevorzugt. Sofern mehrere Hüllverbindungen verwendet werden, können diese in einer, aber auch in mehreren Schichten getrennt aufgebracht werden. Besonders bevorzugt werden für die erfindungsgemäßen Waschmittel umhüllte Natriumpercarbonatpartikel, wie sie nach dem Verfahren der Patentanmeldung WO 95/02555 gewonnen werden. Das dort geschilderte Verfahren zeichnet sich dadurch aus, daß als Hüllverbindung sowohl Natriumcarbonat als auch Natriumsilikat und eines oder mehrere Magnesiumsalze aus der Gruppe Magnesiumsulfat, Magnesiumchlorid und Magnesiumcarbonat in einer einzigen oder in getrennten Schichten zur Umhüllung verwendet werden. Vorzugsweise werden 0,5 - 25 Gew.-% und insbesondere 1 - 15 Gew.-% dieser Hüllsubstanzen, bezogen auf das fertige umhüllte Granulat in getrennten Schichten aufgebracht. Wird ein so umhülltes Natriumpercarbonat-Granulat, das außerdem die obengenannten Spezifikationen hinsichtlich Schüttdichte, Teilchengröße und Teilchengrößenverteilung aufweist im erfindungsgemäßen Wasch- und Reinigungsmittel verwendet, so resultieren überraschend große chemische Beständigkeit und Stabilität gegen Entmischung bei Transport und Lagerung.

Im einfachsten Falle bestehen die erfindungsgemäßen Mittel nur aus den beiden vorstehend beschriebenen obligatorischen Granulaten, wobei das Buildersubstanzen enthaltende Granulat vorzugsweise 10 Gew.-% bis 95 Gew.-% und insbesondere 30 Gew.-% bis 90 Gew.-% des gesamten Wasch- und Reinigungsmittels ausmacht. Das Natriumpercarbonat enthaltende Granulat macht demzufolge vorzugsweise 90 Gew.-% bis 5 Gew.-% und insbesondere 70 Gew.-% bis 10 Gew.-% des gesamten Mittels aus.

In der Mehrzahl der Fälle werden die erfindungsgemäßen Mittel aber weitere Inhaltsstoffe außerhalb dieser beiden Granulate enthalten. Vorzugsweise beträgt die Menge dieser auf andere Weise zugefügten Inhaltsstoffe nicht mehr als 30 Gew.-%, insbesondere nicht mehr als 15 Gew.-%. Die Zumischung außerhalb der beiden obligatorischen Granulate kommt vor allem für solche Bestandteile in Frage, die sich infolge von chemischen oder physikalischen Unverträglichkeiten nur unter Schwierigkeiten in die obligatorischen Granulate einarbeiten lassen. Eine getrennte Einarbeitung in das Wasch- und Reinigungsmittel ist auch dann zweckmäßig, wenn besonders schnelle Auflösung für bestimmte Inhaltsstoffe gewünscht wird oder die getrennte Konfektionierung die Wirksamkeit dieser Bestandteile verbessert. Für eine getrennte Einarbeitung in das Wasch- und Reinigungsmittel kommen deshalb in erster Linie Bleichaktivatoren, Enzyme, Schaumregulatoren und Vergrauungsinhibitoren in Betracht.

Die Herstellung des erfindungsgemäßen Mittels erfolgt durch einfaches Vermischen der Granulate und gegebenenfalls weiteren Bestandteile, vorzugsweise in solchen Apparaturen, die nur einen geringen Energieeintrag liefern, beispielsweise in Freifallmischern oder in niedertourig laufenden Schaufelmischern. Bei diesem Mischvorgang soll die Kornstruktur vorzugsweise nicht verändert werden.

Bei der Ermittlung der mittleren Korngröße für die beiden obligatorischen Granulate wird unterstellt, daß die Korngrößenverteilung jeweils dem Rosin-Rammler-Sperling-Bennet-Verteilungsgesetz entspricht. Die Korngrößenverteilung selbst wird zunächst über Siebanalyse bestimmt. Durch Übertragung der Siebkennzahlen in ein mehrfach logarithmisches Körnungsnetz entsprechend der RRSB-Verteilung erhält man eine gegebenenfalls angenäherte Gerade, aus der die Korngröße, die zu einer relativen Rückstandssumme von 50 % gehört, unmittelbar abgelesen werden kann. Diese Korngröße, die die Gesamtmenge des Granulats in zwei gewichtsgleiche Mengen teilt, wird in der vorliegenden Anmeldung als mittlere Korngröße (mittlere Teilchengröße) verstanden. Dem RRSB-Diagramm ist auch die Breite der Korngrößenverteilung zu entnehmen. Weitere Einzelheiten zur RRSB-Auswertung finden sich bei M. Zogg, Einführung in die Mechanische Verfahrenstechnik, Stuttgart 1987, insbesondere Seiten 32-37.

### Beispiele

1. Mit Hilfe eines Extrusionsverfahrens gemäß EP 486 592 wurde ein Tenside und Buildersubstanz enthaltendes Granulat der folgenden Zusammensetzung hergestellt:

| | |
|---|---|
| Natriumfettalkoholsulfat (C₁₆₋₁₈) | 26,5 Gew.-% |
| Fettalkoholethoxylat (C₁₂₋₁₈ + 7 E0) | 4,6 Gew.-% |
| Natriumdisilikat (schichtförmig) | 18,0 Gew.-% |
| Zeolith NaA | 21,7 Gew.-% |
| Polyethylenglykol 400 | 2,2 Gew.-% |
| Acrylsäure-Maleinsäure-Copolymer (Natriumsalz) | 7,5 Gew.-% |
| Na₂SO₄, H₂O, sonstige Bestandteile | zu 100 Gew.-% |

Die Extrusion des Gemischs erfolgte bei 50 °C durch eine Düsenplatte mit 1,4 mm Lochdurchmesser. Nach dem Schneiden der Stränge wies das Granulat eine mittlere Korngröße von 1,4 mm auf. 77,3 Gew.-% aller Teilchen lagen lt. Siebanalyse in einem Bereich zwischen 0,8 mm und 1,6 mm. Die Schüttdichte betrug 780 g/l.

Ein durch Wirbelschichtsprühgranulation gemäß der deutschen Patentanmeldung DE-A-43 24 104 hergestelltes beschichtetes Natriumpercarbonat wurde mit Hilfe von Sieben in Fraktionen unterschiedlicher Korngröße aufgeteilt:

| | **Schüttdichte g/l** | **Korngröße mm** |
|---|---|---|
| Fraktion 1 | 850 | 0,8 - 1,0 |
| Fraktion 2 | 850 | 1,0 - 1,25 |
| Fraktion 3 | 840 | 1,25 - 1,4 |
| Fraktion 4 | 830 | 1,4 - 1,6 |

2. Zur Prüfung des Entmischungsverhaltens wurden in einem Pflugscharmischer jeweils 850 g des Tenside und Buildersubstanzen enthaltenden Granulats mit 150 g der einzelnen Fraktionen des Percarbonatgranulats homogen gemischt. Der Aktivsauerstoffgehalt der so hergestellten Waschmittel 1 - 4 lag damit bei 1,95 Gew.-%. Die fertigen Waschmittel 1 - 4 wurden in Waschmittelpaketen abgefüllt und in den senkrecht stehenden Paketen 30 Minuten auf einem Rütteltisch (50 Hz, 160 µm) bewegt. Nach dieser Zeit wurde von dem im Paket befindlichen Waschmittel je eine Probe oben und unten im Paket entnommen und mittels Titration auf den Gehalt an Aktivsauerstoff untersucht:

| Waschmittel | enthaltene Percarbonat Fraktion | Aktivsauerstoffgehalt / Gew.-% | |
|---|---|---|---|
| | | unten | oben |
| 1 | 1 | 1,4 | 2,9 |
| 2 | 2 | 1,52 | 1,76 |
| 3 | 3 | 1,72 | 1,91 |
| 4 | 4 | 1,48 | 2,40 |

Aus den Ergebnissen wird deutlich, daß die geringste Entmischungstendenz bei den Waschmitteln 2 und und 3 auftritt.

## Patentansprüche

1. Wasch- und Reinigungsmittel in granulierter Form, bestehend aus wenigstens zwei Granulaten unterschiedlicher Zusammensetzung, von denen eines Buildersubstanzen sowie gegebenenfalls Tenside und weitere Wirkstoffe enthält und durch Agglomeration seiner Bestandteile, gegebenenfalls unter Druck mit nachfolgender Zerkleinerung zur gewünschten Korngröße, hergestellt wird und ein anderes im wesentlichen aus Natriumpercarbonat besteht und durch Wirbelschichtsprühgranulation hergestellt wird, dadurch gekennzeichnet, daß diese beiden Granulate jeweils allein Schüttdichten von mehr als 500 g/l aufweisen, die mittleren Teilchengrößen beider Granulate im Bereich von 0,6 bis 6 mm liegen und das Verhältnis der mittleren Teilchengrößen beider Granulate zwischen 2 : 1 und 1 : 2 liegt.

2. Wasch- und Reinigungsmittel nach Anspruch 1, bei dem in den beiden mindestens enthaltenen Granulaten wenigstens 80 Gew.-% aller Teilchen eine Korngröße im Bereich von 50 % bis 150 %, vorzugsweise im Bereich von 80 % bis 120 % der jeweils mittleren Korngröße aufweisen.

3. Wasch- und Reinigungsmittel nach einem der Ansprüche 1 oder 2, bei dem die mittleren Korngrößen der beiden mindestens enthaltenen Granulate im Bereich zwischen 0,8 und 3 mm, vorzugsweise im Bereich zwischen 1 und 2 mm liegen.

4. Wasch- und Reinigungsmittel nach einem der Ansprüche 1 bis 3, bei dem das Verhältnis der mittleren Korngrößen der beiden mindestens enthaltenen Granulate im Bereich von 1,5 : 1 bis 1 : 1,5, vorzugsweise im Bereich von 1,2 : 1 bis 1 : 1,2 liegt.

5. Wasch- und Reinigungsmittel nach einem der Ansprüche 1 bis 4, bei dem die Schüttdichten der beiden mindestens enthaltenen Granulate im Bereich von 600 bis 1200 g/l und vorzugsweise im Bereich von 700 bis 1000 g/l liegen.

6. Wasch- und Reinigungsmittel nach einem der Ansprüche 1 bis 5, bei dem das Buildersubstanzen enthaltende Granulat durch Mischgranulation aus festen und flüssigen Komponenten und gegebenenfalls gleichzeitiger oder nachfolgender Trocknung hergestellt wird.

7. Wasch- und Reinigungsmittel nach einem der Ansprüche 1 bis 5, bei dem das Buildersubstanzen enthaltende Granulat durch Extrusion eines Gemisches seiner Komponenten durch Lochdüsen und nachfolgende Zerkleinerung der bei der Extrusion zunächst anfallenden Produktstränge hergestellt wird.

8. Wasch- und Reinigungsmittel nach einem der Ansprüche 1 bis 7, bei dem das Natriumpercarbonat enthaltende Granulat durch klassierende Wirbelschichtsprühgranulation eines wäßrigen Gemisches aus Natriumcarbonat und Wasserstoffperoxid gegebenenfalls zusammen mit stabilisierend wirkenden Zusätzen und anderen Hilfsstoffen hergestellt wird.

9. Wasch- und Reinigungsmittel nach einem der Ansprüche 1 bis 7, bei dem die Körnchen des Natriumpercarbonat enthaltenden Granulats mit einer oder mehreren Hüllschichten zur Verbesserung der Lagerstabilität versehen sind, wobei das Material dieser Hüllschichten vorzugsweise aus der Gruppe der wasserlöslichen anorganischen Salze, insbesondere aus der Gruppe der Alkalicarbonate, der löslichen Magnesiumsalze, der Alkalisilikate und deren Mischungen ausgewählt ist.

10. Wasch- und Reinigungsmittel nach einem der Ansprüche 1 bis 9, das zusätzlich zu den bereits genannten Granulaten ein oder mehrere Granulate mit anderen Wirkstoffen aus der Gruppe der Bleichaktivatoren, der Enzyme, der Schaumregulatoren und der Vergrauungsinhibitoren enthält.

## Claims

1. A granular detergent consisting of at least two granulates of different composition of which one contains builders and optionally surfactants and other active ingredients and is produced by agglomeration of its constituents, optionally under pressure, and subsequent size reduction to the required particle size while the other granulate consists essentially of sodium percarbonate and is produced by fluidized bed spray granulation, characterized in that the two granulates on their own have bulk densities of more than 500 g/l, in that the mean particle sizes of both granulates is in the range from 0.6 to 6 mm and in that the ratio between the mean particle sizes of the two granulates is 2:1 to 1:2.

2. A detergent as claimed in claim 1, characterized in that at least 80% by weight of all the particles in the at least two granulates present have a particle size of 50% to 150% and preferably 80% to 120% of the particular mean particle size.

3. A detergent as claimed in claim 1 or 2, characterized in that the mean particle sizes of the at least two granulates present is between 0.8 and 3 mm and preferably between 1 and 2 mm.

4. A detergent as claimed in any of claims 1 to 3, characterized in that the ratio between the mean particle sizes of the at least two granulates present is in the range from 1.5:1 to 1:1.5 and preferably in the range from 1.2:1 to 1:1.2.

5. A detergent as claimed in any of claims 1 to 4, characterized in that the bulk densities of the at least two granulates present are in the range from 600 to 1200 g/l and preferably in the range from 700 to 1,000 g/l.

6. A detergent as claimed in any of claims 1 to 5, characterized in that the builder-containing granulate is produced by mixing granulation from solid and liquid components, optionally accompanied or followed by drying.

7. A detergent as claimed in any of claims 1 to 5, characterized in that the builder-containing granulate is produced by extrusion of a mixture of its components through multiple-bore dies and size reduction of the product strands obtained in the extrusion phase.

8. A detergent as claimed in any of claims 1 to 7, characterized in that the granulate containing sodium percarbonate is produced by grading fluidized bed spray granulation of a water-containing mixture of sodium carbonate and hydrogen peroxide, optionally together with stabilizing additives and other auxiliaries.

9. A detergent as claimed in any of claims 1 to 7, characterized in that the granules of the sodium percarbonate-containing granulate are coated with one or more shell-forming layers to improve stability in storage, the constituent material of these layers preferably being selected from the group of water-soluble inorganic salts, more particularly from the group of alkali metal carbonates, soluble magnesium salts, alkali metal silicates and mixtures thereof.

10. A detergent as claimed in any of claims 1 to 9, characterized in that, in addition to the granulates already mentioned, it contains one or more granulates containing other active ingredients from the group of bleach activators, enzymes, foam regulators and redeposition inhibitors.

## Revendications

1. Agent de lavage et de nettoyage -sous forme granulaire, constitué d'au moins deux produits granulés de composition différente, dont un contient des substances adjuvantes et éventuellement des tensioactifs et d'autres substances actives et qui est fabriqué par agglomération de ses constituants, le cas échéant sous pression, suivie de réduction à la grosseur de grain souhaitée, tandis que l'autre se compose essentiellement de percarbonate de sodium et est fabriqué par granulation par pulvérisation en lit fluidisé, caractérisé en ce que ces deux produits granulés présentent chacun pris isolément une densité en vrac supérieure à 500 g/l, la grosseur moyenne des grains des deux produits granulés se situe dans l'intervalle de 0,6 à 6 mm, et le rapport de la grosseur de grain moyenne des deux produits granulés est compris entre 2:1 et 1:2.

2. Agent de lavage et de nettoyage selon la revendication 1, dans lequel au moins 80 % en poids de toutes les particules des deux produits granulés au moins présents présentent une grosseur de grain située dans l'intervalle de 50 à 150 % et de préférence, dans la plage de 80 à 120 % de la grosseur de grain moyenne respective.

3. Agent de lavage et de nettoyage selon une des revendications 1 ou 2, dans lequel la grosseur de grain moyenne des deux produits granulés au moins présents se situe dans l'intervalle de 0,8 à 3 mm et de préférence, dans la plage de 1 à 2 mm.

4. Agent de lavage et de nettoyage selon une des revendications 1 à 3, dans lequel le rapport de la grosseur de grain moyenne des deux produits granulés au moins présents est compris dans l'intervalle de 1,5:1 à 1:1,5 et en particulier, dans la plage de 1,2:1 à 1:1,2.

5. Agent de lavage et de nettoyage selon une des revendications 1 à 4, dans lequel la densité en vrac des deux produits granulés au moins présents se situe dans l'intervalle de 600 à 1200 g/l et en particulier, dans la plage de 700 à 1000 g/l.

6. Agent de lavage et de nettoyage selon une des revendications 1 à 5, dans lequel le produit granulé renfermant les substances adjuvantes est fabriqué par granulation mixte à partir de composants solides et liquides et éventuellement séchage simultané ou postérieur.

7. Agent de lavage et de nettoyage selon une des revendications 1 à 5, dans lequel le produit granulé renfermant les substances adjuvantes est fabriqué par extrusion d'un mélange de ses composants par des porte-filières perforés, suivie de réduction des boudins de produits, formés tout d'abord lors de l'extrusion.

8. Agent de lavage et de nettoyage selon une des revendications 1 à 7, dans lequel le produit granulé renfermant du percarbonate de sodium est fabriqué par granulation calibrante par pulvérisation en lit fluidisé d'un mélange aqueux de carbonate de sodium et d'eau oxygénée, le cas échéant conjointement avec des additifs à action stabilisante et d'autres adjuvants

9. Agent de lavage et de nettoyage selon une des revendications 1 à 7, dans lequel les grains du produit granulé renfermant le percarbonate de sodium sont revêtus d'une ou de plusieurs couches d'enrobage afin d'améliorer la stabilité au stockage, la matière de ces couches d'enrobage étant sélectionnée de préférence dans le groupe des sels-inorganiques solubles dans l'eau, en particulier dans le groupe des carbonates de métaux alcalins, des sels de magnésium solubles, des silicates de métaux alcalins et des mélanges de ceux-ci.

10. Agent de lavage et de nettoyage selon une des revendications 1 à 9, qui renferme en plus des produits granulés déjà cités, un ou plusieurs produits granulés renfermant d'autres substances actives appartenant au groupe des activateurs de blanchiment, des enzymes, des régulateurs de mousse et des inhibiteurs de ternissement.
